# EUROPEAN PATENT APPLICATION

(11) **EP 3 696 713 A1**
(43) Date of publication of application: **19.08.2020**
(21) Application number: 20155367.4
(22) Date of filing: 04.02.2020
(51) Int. Cl.: G06K 7/10

(54) **SYMBOL READING APPARATUS**

(30) Priority: 12.02.2019 JP 2019022837
(71) Applicant: Toshiba Tec Kabushiki Kaisha, Shinagawa-ku Tokyo (JP)
(72) Inventor: Yamada, Yoshida, Tokyo, 141-8562 (JP); Yajima, Shinsuke, Tokyo, 141-8562 (JP); Harada, Shintaro, Tokyo, 141-8562 (JP)
(74) Representative: Hoffmann Eitle

(57) **Abstract**

A symbol reading apparatus for reading a symbol includes a housing having an opening, a transparent window that covers the opening, a light source arranged at a peripheral portion of the inside of the housing and configured to emit light toward the transparent window, a diffusion element arranged between the light source and the transparent window and including a first side and a second side that is opposite to the first side. The first side is closer to the center of the transparent window than the second side but is farther from a surface of the transparent window than the second side along a direction that extends from the light source to the transparent window, and a light receiver by which the light diffused by the diffusion element and reflected by the symbol is received.

## Description

### CROSS-REFERENCE TO RELATED APPLICATION

This application is based upon and claims the benefit of priority from Japanese Patent Application No. 2019-22837, filed in February 12, 2019, the entire contents of which are incorporated herein by reference.

### FIELD

An embodiment of the present invention relates to a symbol reading apparatus.

### BACKGROUND

Conventionally, there is a symbol reading apparatus which captures and reads a symbol such as a bar code attached to a commodity sold at a store. The symbol reading apparatus has a window on one side of the housing. An illumination light source such as an LED (Light Emitting Diode) is provided inside the housing and emits light toward the outside of the housing through the window. This light is reflected by the symbol attached to the commodity and received by an imaging unit to read the symbol.

In order to ensure the degree of freedom in the direction in which the symbol is read, a plurality of light sources are often provided in the upper and lower peripheral portions or the left and right peripheral portions of the housing. Typically, the light sources are installed close to the window.

The light emitted from each light source is diffused by a planar diffusion sheet provided on the entire surface of the light source, and is irradiated to a wide range from the window. However, the diffused light emitted from the window may not reach the center portion of the window, because the light source is provided in the peripheral portion and positioned close to the window, and the diffusion sheet is provided between the light source and the window in parallel with the window. Therefore, when a target object having a symbol is held near the center portion of the window, the light may not reach the symbol sufficiently in which case the symbol cannot be read successfully.

### SUMMARY OF THE INVENTION

One of the objects of the present invention is to improve prior art techniques and overcome at least some of the prior art problems as for instance above illustrated.

According to a first aspect of the present invention, it is provided a symbol reading apparatus for reading a symbol, comprising a housing having an opening; a transparent window that covers the opening; a light source arranged inside the housing at a peripheral portion and configured to emit light toward the transparent window; a diffusion element arranged between the light source and the transparent window and including a first side and a second side that is opposite to the first side, wherein the first side is closer to the center of the transparent window than the second side but is farther from a surface of the transparent window than the second side along a direction that extends from the light source to the transparent window; and a light receiver by which the light diffused by the diffusion element and reflected by the symbol is received.

Optionally, in the symbol reading apparatus according to the first aspect of the invention, the light source and the diffusion element are arranged on a window side of the housing, and the light receiver is arranged farther from the transparent window than the light source and the diffusion element along the direction that extends from the light source to the transparent window.

Optionally, in the symbol reading apparatus according to the first aspect of the invention, the light receiver is an imaging unit configured to read the symbol.

Optionally, in the symbol reading apparatus according to the first aspect of the invention, the diffusion element includes a first surface including the first side and a second surface including the second side and has a substantially L-shape.

Optionally, in the symbol reading apparatus according to the first aspect of the invention, the diffusion element is a planar sheet that extends from one end of the light source toward a peripheral side of the housing.

Optionally, in the symbol reading apparatus according to the first aspect of the invention, the diffusion element has a curved surface shape, a convex surface of which is arranged on a window side.

Optionally, in the symbol reading apparatus according to the first aspect of the invention, the first side of the diffusion element contacts one end of the light source.

Optionally, in the symbol reading apparatus according to the first aspect of the invention, the light source is an array of a plurality of LEDs.

Optionally, in the symbol reading apparatus according to the first aspect of the invention, the LEDs are arranged in a first direction, and the diffusion element extends in the first direction.

Optionally, in the symbol reading apparatus according to the first aspect of the invention, wherein the light source is arranged at an upper peripheral portion of the inside of the housing, and the first side of the diffusion element is arranged lower than the second side of the diffusion element.

Optionally, in the symbol reading apparatus according to the first aspect of the invention, the light source is arranged at a lower peripheral portion of the inside of the housing, and the first side of the diffusion element is arranged higher than the second side of the diffusion element.

Optionally, the symbol reading apparatus according to the first aspect of the invention further comprises a mirror by which the light reflected by the symbol is reflected toward the light receiver.

Optionally, the symbol reading apparatus according to the first aspect of the invention further a lamp configured to turn on when the symbol is read.

Optionally, in the symbol reading apparatus according to the first aspect of the invention, the diffusion element is a milky white sheet.

Optionally, the symbol reading apparatus according to the first aspect of the invention, where the diffusion element is made of PET.

Optionally, the symbol reading apparatus according to the first aspect of the invention, where the symbol is a barcode attached to a commodity.

### BRIEF DESCRIPTION OF THE DRAWINGS

FIG. 1 is a perspective view showing a symbol reading apparatus according to an embodiment.
FIG. 2 is a cross-sectional view illustrating an internal structure of the symbol reading apparatus as viewed from one side of thereof.
FIG. 3 is a diagram showing a diffusion sheet and a light emitting unit according to an embodiment.
FIG. 4 is a diagram showing a diffusion sheet and a light emitting unit according to another embodiment.
FIG. 5 is a diagram showing a diffusion sheet and a light emitting unit according to yet another embodiment.

### DETAILED DESCRIPTION

According to an embodiment, a symbol reading apparatus for reading a symbol includes a housing having an opening, a transparent window that covers the opening, a light source arranged at a peripheral portion of the inside of the housing and configured to emit light toward the transparent window, a diffusion element arranged between the light source and the transparent window and including a first side and a second side that is opposite to the first side. The first side is closer to the center of the transparent window than the second side but is farther from a surface of the transparent window than the second side along a direction that extends from the light source to the transparent window, and a light receiver by which the light diffused by the diffusion element and reflected by the symbol is received.

Hereinafter, a symbol reading apparatus according to one or more embodiments of the present invention will be described with reference to the accompanying drawings. In the embodiments, diffusion sheets are described as an example of a diffusion material. In addition, in the embodiments, a commodity is describes as an example of an object to be read. It should be noted that the present invention is not limited to the embodiments described below.

First, the outline of the symbol reading apparatus will be described. For example, the symbol reading apparatus is embedded into a POS (Point of Sales) terminal installed in a store. The symbol reading apparatus is a device for reading a symbol, such as a bar code or a two dimensional code, which is attached to a commodity, which is purchased by a customer. The symbol reading apparatus receives the reflected light from the symbol and reads the symbol. The POS terminal acquires the commodity specifying information specifying the commodity based on the read symbol, and executes the sales processing of the commodity.

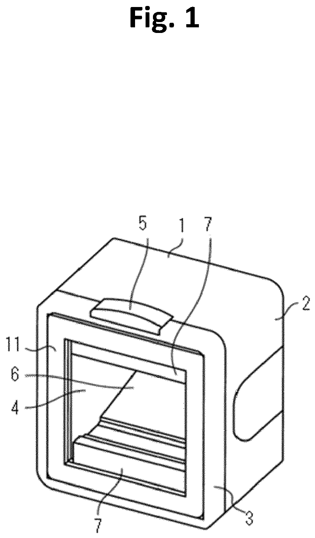

Next, the structure of the symbol reading apparatus will be described. FIG. 1 is a perspective view showing a symbol reading apparatus 1 according to an embodiment. As shown in FIG. 1, the symbol reading apparatus 1 has a substantially cubic shape or a substantially rectangular parallelepiped shape. The symbol reading apparatus 1 has a housing 2 and a front cover 3. The house 2 is open forward, and the front cover 3 is fitted from front. A window 4 made of transparent glass or plastic is fitted in a substantially central portion of the front cover 3. Additionally, a panel 11 is fitted into the peripheral portion of the front cover 3 to fix the window 4 to the front cover 3. The window 4 has a central portion 4a in the approximate central portion of the upper and lower sides and the right and left sides of the window 4.

The symbol reading apparatus 1 comprises diffusion sheets 7 at the upper and lower positions of the window 4, which are front planar portions of the inner portion of the housing 2. Each of the diffusion sheets 7 is, for example, a milky white sheet in which fine particles are scattered and printed on a polyester sheet (e.g., PET (Polyethylene Terephthalate)). The diffusion sheets 7 diffuse the light emitted from a light source of the symbol reading apparatus 1, which is described later.

The symbol reading apparatus 1 also includes a planar mirror 6 which is mounted obliquely within the housing 2. The mirror 6 receives light reflected by a symbol S and incident thereon, and then reflects the light toward an imaging unit, which will be described later.

The symbol reading apparatus 1 comprises a reading lamp 5 on the top surface thereof. The reading lamp 5 emits light when the POS terminal determines that the symbol reading apparatus 1 correctly reads the symbol S so that an operator of the POS terminal can confirm that the reading is successfully done.

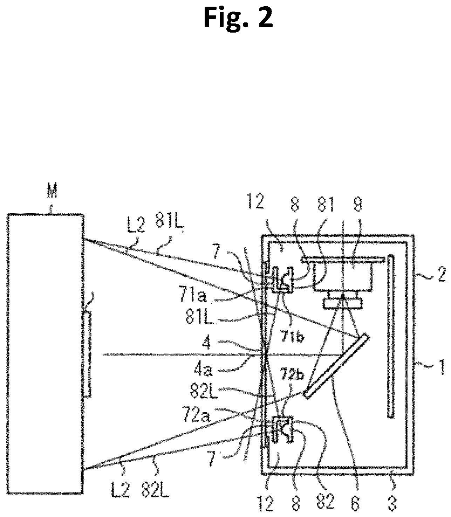

Next, the internal structure of the symbol reading apparatus 1 will be described. FIG. 2 is a sectional view showing the internal structure of the symbol reading apparatus 1 as viewed from one side thereof. As shown in FIG. 2, the symbol reading apparatus 1 includes light emitting units 8, each of which is a light source in a peripheral portion 12 of the housing 2, which is located at the upper portion or the lower portion of window 4. Each of the light emitting units 8 is composed of a plurality of LEDs (Light Emitting diodes) arranged in a line in the depth direction in FIG. 2, for example. The light emitting unit 8 emits light toward the window 4.

The peripheral portion 12 refers to a region near the boundary between the window 4 and the front cover 3, which is the upper or lower side of the symbol reading apparatus 1. In an embodiment, the light emitting unit 8 is provided on each of the upper portion of the housing 2 and the lower portion of the housing 2. The light emitting unit 8 provided on the upper portion of the housing 2 is referred to as a light emitting unit 81. The light emitting unit 8 provided in the lower portion of the housing 2 is referred to as a light emitting unit 82.

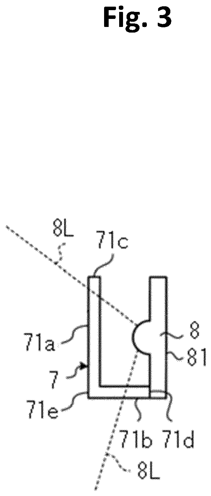

The light emitting units 81 and 82 radiate light to the outside of the window 4 from the upper and lower sides of the housing 2, respectively. The diffusion sheets 7 are provided between the window 4 and each of the light emitting units 81 and 82. Each of the diffusion sheets 7 is formed in a shape as shown in FIG. 3. FIG. 3 is a diagram illustrating the diffusion sheet 7 and the light emitting unit 81. As shown in FIG. 3, the diffusion sheet 7 includes a planar portion 71a, a bent portion 71b, an end portion 71c, an end portion 71d, and an extending portion 71e.

The planar portion 71a is arranged in parallel with the window 4 and the light emitting unit 81. The planar portion 71a extends from a position near the peripheral portion 12 to the extending portion 71e in the downward direction in FIG. 2. The bent portion 71b extends from the extending portion 71e toward the opposite direction to the window 4. That is, the diffusion sheet 7 is bent at substantially right angle at the extending portion 71e such that the diffusion sheet 7 has a substantially L-shape. The end portion 71d of the diffusion sheet 7 contacts one end of the light emitting unit 81. Thus, the diffusion sheet 7 partially covers the light emitting side of the light emitting unit 81 by the planar portion 71a and the bent portion 71b.

The planar portion 71a diffuses light emitted from the light emitting unit 81 toward the window 4. Therefore, the light that has passed through the planar portion 71a is diffused to a wider angle. Further, the bent portion 71b diffuses light emitted from the light emitting unit 81 downward and toward the central portion 4a. Therefore, the light which has passed through the bent portion 71b is also diffused to a wider angle. The light that has passed through the diffusion sheet 7 is diffused in the range 81L, and exits from the window 4.

On the other hand, the light emitting unit 82 radiates light to the outside of the window 4 from the lower side of the housing 2 to the window 4 substantially upward. The diffusion sheet 7 is provided between the window 4 and the light emitting unit 82. The diffusion sheet 7 has the same shape as shown in FIG. 3 but is installed upside down. The diffusion sheet 7 includes a planar portion 72a, a bent portion 72b, an end portion 72c, an end portion 72d, and an extending portion 72e.

The planar portion 72a is arranged in parallel with the window 4 and the light emitting unit 82. The planar portion 72a extends from a position near the peripheral portion 12 to the extending portion 72e in the upward direction in FIG. 2. The bent portion 72b extends from the extending portion 72e in the direction opposite to the window 4. That is, the diffusion sheet 7 is bent at substantially right angle at the extending portion 72e such that the diffusion sheet 7 has a substantially L-shape. The diffusion sheet 7 partially covers the light emitting side of the light emitting unit 82. Therefore, the end portion 72d, which contacts one end of the light emitting unit 82 is located farther from the window 4 than the end portion 72c of the planar portion 72a.

The planar portion 72a diffuses light emitted from the light emitting unit 82 toward the window 4. Therefore, the light that has passed through the planar portion 72a is diffused to a wider angle. Further, the bent portion 72b diffuses light emitted from the light emitting unit 82 downward and toward the central portion 4a. Therefore, the light that has passed through the bent portion 72b is also diffused to a wider angle. The light that has passed through the diffusion sheet 7 is diffused in the range 82L, and exits from the window 4.

Then, the range 81L and the range 82L include the central portion 4a, i.e., the lights emitted from light emitting units 81 and 82 are diffused by the diffusion sheets 7 and reach the central portion 4a sufficiently. That is, the light emitted from the light emitting unit 8 is diffused by the diffusion sheets 7 to reach the central portion 4a sufficiently.

The symbol reading apparatus 1 comprises the mirror 6. The mirror 6 is inclined in an oblique direction with respect to the housing 2. The mirror 6 reflects light reflected by the symbol S toward the imaging unit 9 by approximately 90 degrees.

The symbol reading apparatus 1 also includes an imaging unit 9 within the housing 2. The imaging unit 9 has a planar CMOS (complementary metal-oxide semiconductor) image sensor, for example. The imaging unit 9 receives the light reflected by the mirror 6. The imaging unit 9 reads the symbol S by receiving the reflected light.

The light emitted from the light emitting unit 8 is diffused by the diffusion sheets 7. The light diffused by the diffusion sheets 7 is emitted from the window 4, and reflected by the symbol S. The reflected light L2 is incident on the symbol reading apparatus 1 through window 4. The incident light is reflected by the mirror 6, and imaged by the imaging unit 9.

The light emitted from the light emitting unit 8 is diffused by the diffusion sheets 7 to reach the central portion 4a of the window 4. For this reason, even if the commodity M is held very close to the window 4, the light reaches the symbol S. Therefore, even when the commodity M is brought close to the central portion 4a of the window 4, the symbol S can be read.

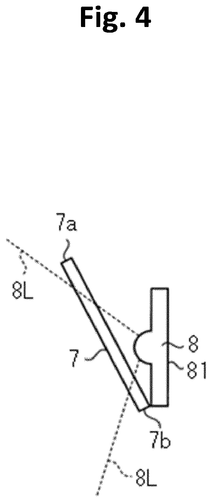

The shape of the diffusion sheets 7 shown in FIGS. 2 and 3 is an example, and may be other shapes. For example, as shown in FIG. 4, the diffusion sheets 7 may be a plate having a planar shape extending from one end of the light emitting unit 8 toward the peripheral portion 12 so as to be oblique with respect to the window 4 and the light emitting unit 8. In this case, the end portion 7b on the central portion 4a side of the diffusion sheet 7 is arranged farther away from the window 4 than the end portion 7a of the diffusion sheet 7 that is close to the peripheral portion 12. Each of the diffusion sheets 7 arranged on the upper side of the housing 2 and the lower side of the housing 2 are arranged symmetrically with respect to the central portion 4a of the window 4.

By arranging the diffusion sheets 7 as described above, the light emitted from the light emitting unit 8 is diffused by the diffusion sheets 7, and reaches the central portion 4a of the window 4 sufficiently. For this reason, even if the commodity M is held very close to the window 4, the light reaches the symbol S. Therefore, the symbol S can be read even in the case where the commodity M is placed close to the central portion 4a of the window.

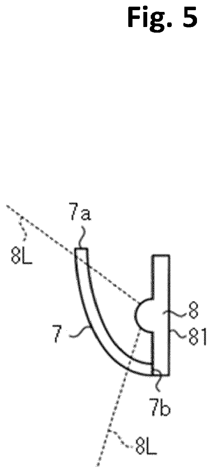

Further, as shown in FIG. 5, the diffusion sheet 7 may have a curved plate, one side of which contacts the light emitting unit 8. In this case, the diffusion sheet 7 extends from that side toward the peripheral portion 12 so as to be convex toward the central portion 4a of the window 4. The shape of the curved surface may be a spherical surface or an elliptical surface. That is, the end portion 7b of the diffusion sheet 7 is farther from the window 4 than the end portion 7a of the diffusion sheet 7. The diffusion sheet 7 is formed to cover the light emitting side of the light emitting unit 82 by the curved surface.

By arranging the diffusion sheets 7 having such a shape, the light emitted from the light emitting unit 8 is diffused by the diffusion sheets 7, and reaches the central portion 4a of the window 4. For this reason, even if the commodity M is held very close to the window 4, the light reaches the symbol S. Therefore, the symbol S can be read even in the case where the commodity M is placed close to the central portion 4a of the window 4.

According to such an embodiment, light emitted from the light emitting unit 8 is diffused by the diffusion sheet 7 that extends from one end of the light emitting unit 8 to the peripheral portion 12 such that one end of the diffusion sheet 7 is closer to the peripheral portion 12 than the other end on the peripheral portion 4. Therefore, the symbol S can be read even if the commodity M is brought close to the central portion 4a of the window 4.

For example, in the embodiments, the light emitting unit 8 and the diffusion sheets 7 are provided at the upper and lower positions of the peripheral portion 12. However, the present invention is not limited thereto, and the light emitting unit 8 and diffusion sheets 7 may be provided in the left and right positions of the peripheral portion 12, for example.

In addition, in the embodiments, two light emitting units 8 are provided vertically. However, the present invention is not limited thereto, and the light emitting unit 8 may be provided at any one of the upper, lower, left and right sides of the peripheral portion 12. Further, the light emitting unit 8 may be provided at three or more of the upper, lower, left and right sides of the peripheral portion 12.

In addition, in the embodiments, the diffusion sheets 7 are described as an example of an element to diffuse light emitted from the light emitting unit 8. However, the present invention is not limited thereto, and any material may be used as long as the light emitted from the light emitting unit 8 is diffused to a wide range.

In addition, in the embodiments, the peripheral portion 12 is described as being provided on the upper side and the lower side of the symbol reading apparatus 1. However, the peripheral portion 12 may be provided on the left side and the right side of the symbol reading apparatus 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions as defined by the appended claims.

## Claims

1. A symbol reading apparatus for reading a symbol, comprising:
a housing having an opening;
a transparent window that covers the opening;
a light source arranged inside the housing at a peripheral portion and configured to emit light toward the transparent window;
a diffusion element arranged between the light source and the transparent window and including a first side and a second side that is opposite to the first side, wherein
the first side is closer to the center of the transparent window than the second side but is farther from a surface of the transparent window than the second side along a direction that extends from the light source to the transparent window; and
a light receiver by which the light diffused by the diffusion element and reflected by the symbol is received.

2. The symbol reading apparatus according to claim 1, wherein
the light source and the diffusion element are arranged on a window side of the housing, and
the light receiver is arranged farther from the transparent window than the light source and the diffusion element along the direction that extends from the light source to the transparent window.

3. The symbol reading apparatus according to claim 1 or 2,
wherein
the light receiver is an imaging unit configured to read the symbol.

4. The symbol reading apparatus according to any of claims 1 to 3, wherein
the diffusion element includes a first surface including the first side and a second surface including the second side and has a substantially L-shape.

5. The symbol reading apparatus according to any of claims 1 to 4, wherein
the diffusion element is a planar sheet that extends from one end of the light source toward a peripheral side of the housing.

6. The symbol reading apparatus according to any of claims 1 to 5, wherein
the diffusion element has a curved surface shape, a convex surface of which is arranged on a window side.

7. The symbol reading apparatus according to any of claims
1 to 6, wherein
the first side of the diffusion element contacts one end of the light source.

8. The symbol reading apparatus according to any of claims
1 to 7, wherein
the light source is an array of a plurality of LEDs.

9. The symbol reading apparatus according to claim 8,
wherein
the LEDs are arranged in a first direction, and
the diffusion element extends in the first direction.

10. The symbol reading apparatus according to any of claims
1 to 9, wherein
the light source is arranged at an upper peripheral portion of the inside of the housing, and
the first side of the diffusion element is arranged lower than the second side of the diffusion element.

11. The symbol reading apparatus according to any of claims
1 to 10, wherein
the light source is arranged at a lower peripheral portion of the inside of the housing, and
the first side of the diffusion element is arranged higher than the second side of the diffusion element.

12. The symbol reading apparatus according to any of claims
1 to 11, further comprising:
a mirror by which the light reflected by the symbol is reflected toward the light receiver.

13. The symbol reading apparatus according to any of claims
1 to 12, further comprising:
a lamp configured to turn on when the symbol is read.

14. The symbol reading apparatus according to any of claims
1 to 13, wherein
the diffusion element is a milky white sheet and/or
the diffusion element is made of PET.

15. The symbol reading apparatus according to any of claims
1 to 14,
the symbol is a barcode attached to a commodity.
